# EUROPEAN PATENT APPLICATION

(11) **EP 4 141 613 A1**
(43) Date of publication of application: **01.03.2023**
(21) Application number: 21875976.9
(22) Date of filing: 27.09.2021
(51) Int. Cl.: G06F 1/16, G09F 9/30

(54) **ELECTRONIC DEVICE COMPRISING FLEXIBLE DISPLAY**

(30) Priority: 29.09.2020 KR 20200126965
(71) Applicant: Samsung Electronics Co., Ltd., Suwon-si, Gyeonggi-do 16677 (KR)
(72) Inventor: JUNG, Jinho, Suwon-si, Gyeonggi-do 16677 (KR); JO, Youngkyong, Suwon-si, Gyeonggi-do 16677 (KR); KANG, Kyongrok, Suwon-si, Gyeonggi-do 16677 (KR); KIM, Wooktae, Suwon-si, Gyeonggi-do 16677 (KR); PARK, Jungkyu, Suwon-si, Gyeonggi-do 16677 (KR); BYUN, Gyuhyun, Suwon-si, Gyeonggi-do 16677 (KR); BYUN, Jungwon, Suwon-si, Gyeonggi-do 16677 (KR); LEE, Bora, Suwon-si, Gyeonggi-do 16677 (KR)
(74) Representative: Gulde & Partner
(86) International application number: PCT/KR2021/013140
(87) International publication number: WO 2022/071701

(57) **Abstract**

According to various embodiments, an electronic device may include a first housing, a second housing foldably connected to the first housing through a hinge device, and a flexible display including a first portion facing the first housing, a second portion facing the second housing, and a bendable third portion connecting the first portion and the second portion and facing the hinge device. The flexible display may include a window layer including a first region facing the first portion, a second region facing the second portion, and a third region facing the third portion and configured to be bendable, a display panel disposed under the window layer, and a subsidiary material layer disposed under the display panel. The window layer may include a glass layer and include, in the third region, a plurality of first openings formed in the glass layer at specified intervals and a filling member filled in the plurality of first openings. Other various embodiments may be possible.

## Description

### [Technical Field]

Various embodiments of the disclosure relate to an electronic device including a flexible display.

### [Background Art]

Electronic devices are gradually becoming slimmer, and are being improved to increase their rigidity, strengthen their design aspects, and differentiate their functional features. The electronic device is being developed to have various shapes, departing from a uniform rectangular shape. The electronic device may have a deformable structure that provides high portability and also provides a large-screen display in use. In connection with such a deformable structure, the electronic device may include a foldable electronic device including at least two housings that are folded or unfolded relative to each other, a slidable electronic device including housings that slidingly move at a specified reciprocating distance relative to each other, or a rollable electronic device including at least one housing that is deformed in a rolling manner. Such electronic devices may include a flexible display that is at least partly bendable in various ways while positioned in the various deformable housings, and the flexible display may require improved bending characteristics.

### [Disclosure of Invention]

### [Technical Problem]

The foldable electronic device may include a hinge device, and first and second housings rotatably connected to the hinge device in opposite directions, respectively. The foldable electronic device may be operated in an in-folding and/or out-folding scheme as the first housing is rotated with respect to the second housing through the hinge device in a range of 0 degrees to 360 degrees. The foldable electronic device may include the flexible display disposed to cross the first housing and the second housing in a 180-degree unfolded state. The flexible display is disposed in such a way that a display panel is stacked under a window layer made of a bendable polymer (e.g., polyimide) material, thereby providing bendability.

However, although the window layer made of a polymer material is capable of providing bendability, transmittance or scratch resistance may be poor. As a countermeasure against this, a thin glass layer (e.g., ultra-thin glass (UTG)) is provided in the window layer, but it may be difficult to ensure rigidity because the glass layer is formed as a thin film to provide bendability.

Various embodiments of the disclosure may provide an electronic device including a flexible display capable of ensuring at least in part bendability.

Various embodiments of the disclosure may provide a flexible display with enhanced transmittance and scratch resistance while ensuring rigidity.

### [Solution to Problem]

According to various embodiments, an electronic device may include a first housing, a second housing foldably connected to the first housing through a hinge device, and a flexible display including a first portion positioned in the first housing, a second portion positioned in the second housing, and a bendable third portion connecting the first portion and the second portion and positioned proximate the hinge device. The flexible display may include a window layer including a first region corresponding to the first portion, a second region corresponding to the second portion, and a third region corresponding to the third portion and configured to be bendable, a display panel disposed under the window layer, and a subsidiary material layer disposed under the display panel. The window layer may include a glass layer including a plurality of first openings formed at specified intervals in the third region and wherein the plurality of first openings are filled with a filler member.

According to various embodiments, an electronic device may include at least one bendable housing, and a flexible display including a bending region that is bendable at least in part through a support of the at least one housing. The flexible display may include a window layer, a display panel disposed under the window layer, and a subsidiary material layer disposed under the display panel. The window layer may include a glass layer a plurality of openings formed at specified intervals in a region corresponding to the bending region and wherein the plurality of openings are filled with a filling member.

### [Advantageous Effects of Invention]

The flexible display according to embodiments of the disclosure can ensure rigidity and also excellent bending characteristics because the window layer includes the plurality of openings formed in at least the bendable region of the glass layer and filled with the filling material having a substantially identical refractive index with that of the glass layer.

In addition, various effects explicitly or implicitly appreciated through the disclosure may be provided.

### [Brief Description of Drawings]

In connection with the description of the drawings, the same or similar reference numerals may be used for the same or similar components.
FIG. 1A is a front perspective view illustrating a flat state or an unfolding state of an electronic device according to various embodiments of the disclosure.
FIG. 1B is a plan view illustrating a front surface of the electronic device in the unfolding state according to various embodiments of the disclosure.
FIG. 1C is a plan view illustrating a rear surface of the electronic device in the unfolding state according to various embodiments of the disclosure.
FIG. 2A is a perspective view illustrating a folding state of the electronic device according to various embodiments of the disclosure.
FIG. 2B is a perspective view illustrating an intermediate state of the electronic device according to various embodiments of the disclosure.
FIG. 3 is an exploded perspective view illustrating the electronic device according to various embodiments of the disclosure.
FIG. 4 is an exploded perspective view illustrating a flexible display according to various embodiments of the disclosure.
FIG. 5A is a plan view illustrating a window layer according to various embodiments of the disclosure.
FIG. 5B is an enlarged view illustrating a region 5b of FIG. 5A according to various embodiments of the disclosure.
FIG. 6A is a partial cross-sectional view of the window layer taken along a line 6a-6a of FIG. 5B according to various embodiments of the disclosure.
FIGS. 6B and 6C are partial cross-sectional views of the window layer according to various embodiments of the disclosure.
FIG. 7 is a view illustrating a folding state of a flexible display according to various embodiments of the disclosure.
FIG. 8A is a plan view of a window layer according to various embodiments of the disclosure.
FIG. 8B is an enlarged view illustrating a region 8b of FIG. 8A according to various embodiments of the disclosure.
FIG. 9 is a schematic view illustrating a crack generated in a window layer according to various embodiments of the disclosure.
FIGS. 10A to 10D are views illustrating patterns formed in a window layer according to various embodiments of the disclosure.
FIGS. 11A and 11B are views illustrating the front and rear of an electronic device according to various embodiments of the disclosure.

### [Mode for the Invention]

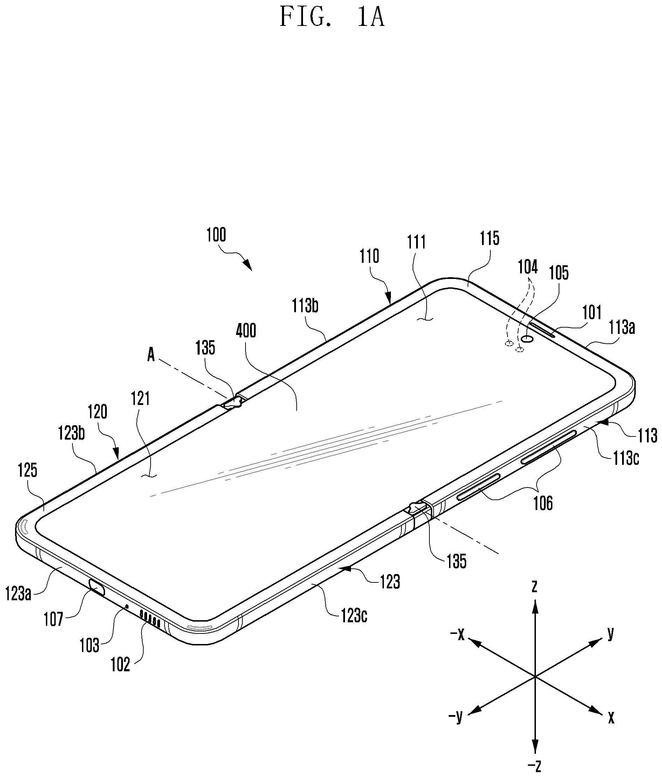

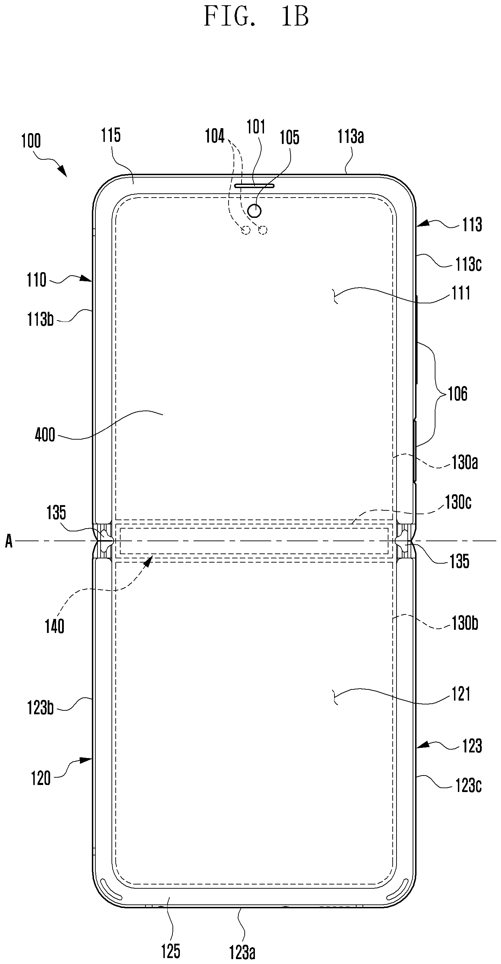

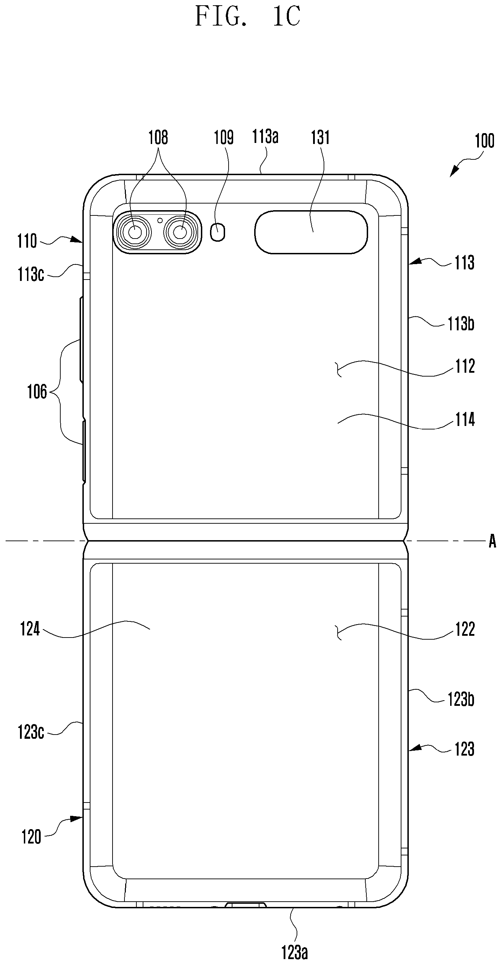

FIG. 1A is a front perspective view of an electronic device in a flat or unfolding state according to various embodiments of the disclosure. FIG. 1B is a plan view illustrating the front of the electronic device in an unfolding state according to various embodiments of the disclosure. FIG. 1C is a plan view illustrating the back of the electronic device in an unfolding state according to various embodiments of the disclosure.

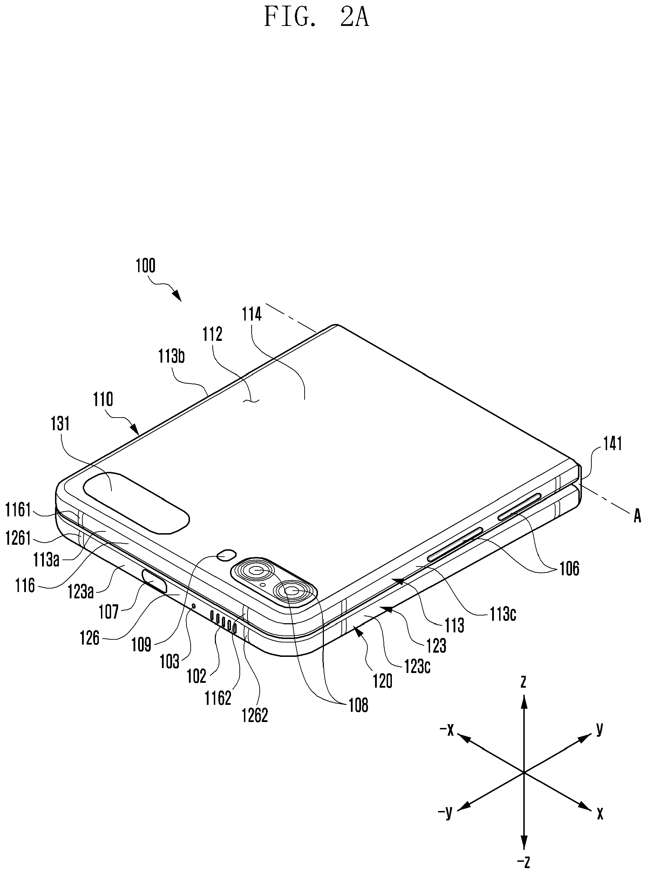

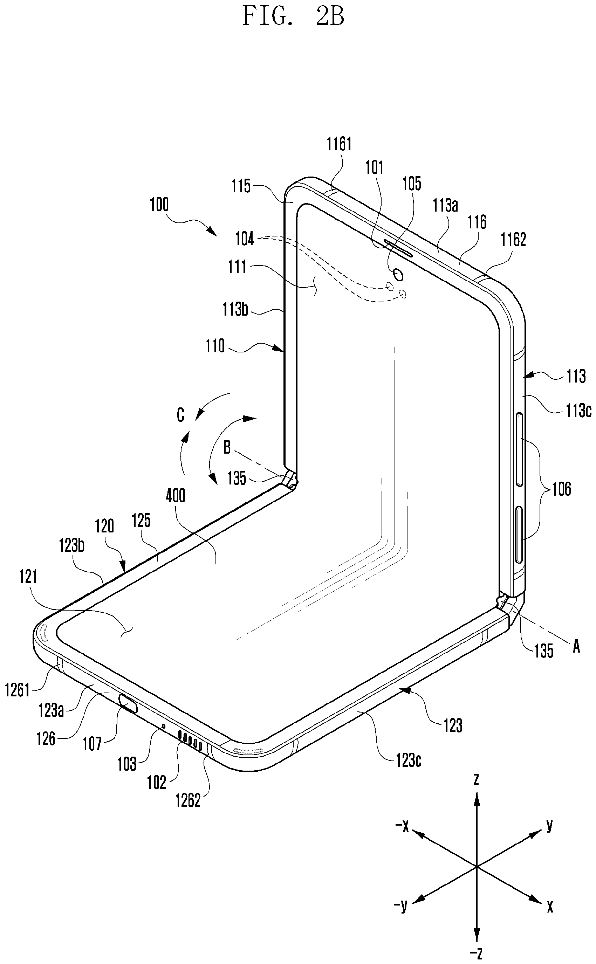

FIG. 2A is a perspective view of the electronic device in a folding state according to various embodiments of the disclosure. FIG. 2B is a perspective view of the electronic device in an intermediate state according to various embodiments of the disclosure.

With reference to FIGS. 1A to 2B, the electronic device 100 may include a pair of housings 110 and 120 (e.g., foldable housings) that are rotatably coupled to be folded relative to a hinge mechanism (e.g., hinge mechanism 140 in FIG. 1B) while facing each other. In a certain embodiment, the hinge mechanism (e.g., hinge mechanism 140 in FIG. 1B) may be disposed in the X-axis direction or in the Y-axis direction. In a certain embodiment, two or more hinge mechanisms (e.g., hinge mechanism 140 in FIG. 1B) may be arranged to be folded in the same direction or in different directions. According to an embodiment, the electronic device 100 may include a flexible display 400 (e.g., foldable display) disposed in an area formed by the pair of housings 110 and 120. According to an embodiment, the first housing 110 and the second housing 120 may be disposed on both sides about the folding axis (axis A), and may have a substantially symmetrical shape with respect to the folding axis (axis A). According to an embodiment, the angle or distance between the first housing 110 and the second housing 120 may vary depending on whether the state of the electronic device 100 is a flat or unfolding state, a folding state, or an intermediate state.

According to various embodiments, the pair of housings 110 and 120 may include a first housing 110 (e.g., first housing structure) coupled to the hinge mechanism (e.g., hinge mechanism 140 in FIG. 1B), and a second housing 120 (e.g., second housing structure) coupled to the hinge mechanism (e.g., hinge mechanism 140 in FIG. 1B). According to an embodiment, in the unfolding state, the first housing 110 may include a first surface 111 facing a first direction (e.g., front direction) (z-axis direction), and a second surface 112 facing a second direction (e.g., rear direction) (negative z-axis direction) opposite to the first surface 111. According to an embodiment, in the unfolding state, the second housing 120 may include a third surface 121 facing the first direction (z-axis direction), and a fourth surface 122 facing the second direction (negative z-axis direction). According to an embodiment, the electronic device 100 may be operated in a manner that the first surface 111 of the first housing 110 and the third surface 121 of the second housing 120 face substantially the same first direction (z-axis direction) in the unfolding state, and the first surface 111 and the third surface 121 face each other in the folding state. According to an embodiment, the electronic device 100 may be operated in a manner that the second surface 112 of the first housing 110 and the fourth surface 122 of the second housing 120 face substantially the same second direction (negative z-axis direction) in the unfolding state, and the second surface 112 and the fourth surface 122 face each other in opposite directions in the folding state. For example, in the folding state, the second surface 112 may face the first direction (z-axis direction), and the fourth surface 122 may face the second direction (negative z-axis direction).

According to various embodiments, the first housing 110 may include a first side member 113 that at least partially constitutes the external appearance of the electronic device 100, and a first rear cover 114 coupled to the first side member 113 and constituting at least a portion of the second surface 112 of the electronic device 100. According to an embodiment, the first side member 113 may include a first side surface 113a, a second side surface 113b extending from one end of the first side surface 113a, and a third side surface 113c extending from the other end of the first side surface 113a. According to an embodiment, the first side member 113 may be formed in a rectangular shape (e.g., square or rectangle) through the first side surface 113a, second side surface 113b, and third side surface 113c.

According to various embodiments, the second housing 120 may include a second side member 123 that at least partially constitutes the external appearance of the electronic device 100, and a second rear cover 124 coupled to the second side member 123 and constituting at least a portion of the fourth surface 122 of the electronic device 100. According to an embodiment, the second side member 123 may include a fourth side surface 123a, a fifth side surface 123b extending from one end of the fourth side surface 123a, and a sixth side surface 123c extending from the other end of the fourth side surface 123a. According to an embodiment, the second side member 123 may be formed in a rectangular shape through the fourth side surface 123a, fifth side surface 123b, and sixth side surface 123c.

According to various embodiments, the pair of housings 110 and 120 are not limited to the illustrated shape and combination, and may be implemented with a combination of other shapes or parts. For example, in a certain embodiment, the first side member 113 may be integrally formed with the first rear cover 114, and the second side member 123 may be integrally formed with the second rear cover 124.

According to various embodiments, in the unfolding state of the electronic device 100, the second side surface 113b of the first side member 113 and the fifth side surface 123b of the second side member 123 may be connected without a gap. According to an embodiment, in the unfolding state of the electronic device 100, the third side surface 113c of the first side member 113 and the sixth side surface 123c of the second side member 123 may be connected without a gap. According to an embodiment, in the unfolding state, the electronic device 100 may be configured such that the combined length of the second side surface 113b and the fifth side surface 123b is longer than the length of the first side surface 113a and/or the fourth side surface 123a. In addition, the combined length of the third side surface 113c and the sixth side surface 123c may be configured to be longer than the length of the first side surface 113a and/or the fourth side surface 123a.

According to various embodiments, the first side member 113 and/or the second side member 123 may be made of a metal or may further include a polymer injected into the metal. According to an embodiment, the first side member 113 and/or the second side member 123 may include at least one conductive portion 116 and/or 126 electrically segmented through one or more segmenting portions 1161 and 1162 and/or 1261 and 1262 made of a polymer. In this case, the at least one conductive portion may be electrically connected to a wireless communication circuit included in the electronic device 100 and may be used as an antenna operating in at least one designated band (e.g., legacy band).

According to various embodiments, the first rear cover 114 and/or the second rear cover 124 may be made of, for example, coated or tinted glass, ceramic, polymer, metal (e.g., aluminum, stainless steel (STS), or magnesium), or a combination thereof.

According to various embodiments, the flexible display 400 may be disposed to extend from the first surface 111 of the first housing 110 across the hinge mechanism (e.g., hinge mechanism 140 in FIG. 1B) to at least a portion of the third surface 121 of the second housing 120. For example, the flexible display 400 may include a first region 130a substantially corresponding to the first surface 111, a second region 130b corresponding to the second surface 121, and a third region 130c (e.g., bendable region) connecting the first region 130a and the second region 130b and corresponding to the hinge mechanism (e.g., hinge mechanism 140 in FIG. 1B). According to an embodiment, the electronic device 100 may include a first protection cover 115 (e.g., first protection frame or first decoration member) coupled along the periphery of the first housing 110. According to an embodiment, the electronic device 100 may include a second protection cover 125 (e.g., second protection frame or second decoration member) coupled along the periphery of the second housing 120. According to an embodiment, the first protection cover 115 and/or the second protection cover 125 may be made of a metal or polymer material. According to an embodiment, the first protection cover 115 and/or the second protection cover 125 may be used as a decoration member. According to an embodiment, the flexible display 400 may be positioned such that the periphery of the first region 130a is interposed between the first housing 110 and the first protection cover 115. According to an embodiment, the flexible display 400 may be positioned such that the periphery of the second region 130b is interposed between the second housing 120 and the second protection cover 125. According to an embodiment, the flexible display 400 may be positioned such that the periphery of the flexible display 400 corresponding to a protection cap 135 is protected through the protection cap disposed in a region corresponding to the hinge mechanism (e.g., hinge mechanism 140 in FIG. 1B). Consequently, the periphery of the flexible display 400 may be substantially protected from the outside. According to an embodiment, the electronic device 100 may include a hinge housing 141 (e.g., hinge cover) that is disposed so as to support the hinge mechanism (e.g., hinge mechanism 140 in FIG. 1B), be exposed to the outside when the electronic device 100 is in the folding state, and be invisible from the outside by being pulled into a first space (e.g., internal space of the first housing 110 ) and a second space (e.g., internal space of the second housing 120) when the electronic device 100 is in the unfolding state. In a certain embodiment, the flexible display 400 may be disposed to extend from at least a portion of the second surface 112 to at least a portion of the fourth surface 122. In this case, the electronic device 100 may be folded so that the flexible display 400 is exposed to the outside (out-folding scheme).

According to various embodiments, the electronic device 100 may include a sub-display 131 disposed separately from the flexible display 400. According to an embodiment, the sub-display 131 may be disposed to be at least partially exposed on the second surface 112 of the first housing 110, and may display status information of the electronic device 100 in place of the display function of the flexible display 400 in case of the folding state. According to an embodiment, the sub-display 131 may be disposed to be visible from the outside through at least some region of the first rear cover 114. In a certain embodiment, the sub-display 131 may be disposed on the fourth surface 122 of the second housing 120. In this case, the sub-display 131 may be disposed to be visible from the outside through at least some region of the second rear cover 124.

According to various embodiments, the electronic device 100 may include at least one of an input device 103 (e.g., microphone), sound output devices 101 and 102, a sensor module 104, camera devices 105 and 108, a key input device 106, or a connector port 107. In the illustrated embodiment, the input device 103 (e.g., microphone), sound output devices 101 and 102, sensor module 104, camera devices 105 and 108, key input device 106, and connector port 107 indicate a hole or shape formed in the first housing 110 or the second housing 120, but may be defined to include a substantial electronic component (e.g., input device, sound output device, sensor module, or camera device) that is disposed inside the electronic device 100 and operated through a hole or a shape.

According to various embodiments, the input device 103 may include at least one microphone 103 disposed on the second housing 120. In a certain embodiment, the input device 103 may include a plurality of microphones 103 disposed to detect the direction of a sound. In a certain embodiment, a plurality of microphones 103 may be disposed at appropriate positions in the first housing 110 and/or the second housing 120. According to an embodiment, the sound output devices 101 and 102 may include speakers 101 and 102. According to an embodiment, the speakers 101 and 102 may include a receiver 101 for calls disposed in the first housing 110, and a speaker 102 disposed in the second housing 120. In a certain embodiment, the input device 103, the sound output devices 101 and 102, and the connector port 107 may be disposed in a space arranged in the first housing 110 and/or the second housing 120 of the electronic device 100, and may be exposed to the external environment through at least one hole formed in the first housing 110 and/or the second housing 120. According to an embodiment, at least one connector port 107 may be used to transmit and receive power and/or data to and from an external electronic device. In a certain embodiment, at least one connector port (e.g., ear jack hole) may accommodate a connector (e.g., ear jack) for transmitting and receiving an audio signal to and from an external electronic device. In a certain embodiment, the hole formed in the first housing 110 and/or the second housing 120 may be commonly used for the input device 103 and the sound output devices 101 and 102. In a certain embodiment, the sound output devices 101 and 102 may include a speaker (e.g., piezo speaker) that operates without using a hole formed in the first housing 110 and/or the second housing 120.

According to various embodiments, the sensor module 104 may generate an electrical signal or data value corresponding to an internal operating state of the electronic device 100 or an external environmental state. The sensor module 104 may detect an external environment, for example, through the first surface 111 of the first housing 110. In a certain embodiment, the electronic device 100 may further include at least one sensor module disposed to detect an external environment through the second surface 112 of the first housing 110. According to an embodiment, the sensor module 104 (e.g., illuminance sensor) may be disposed under the flexible display 400 to detect an external environment through the flexible display 400. According to an embodiment, the sensor module 104 may include at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, an illuminance sensor, a proximity sensor, a biometric sensor, an ultrasonic sensor, or an illuminance sensor 104.

According to various embodiments, the camera devices 105 and 108 may include a first camera device 105 (e.g., front camera device) disposed on the first surface 111 of the first housing 110, and a second camera device 108 disposed on the second surface 112 of the first housing 110. The electronic device 100 may further include a flash 109 disposed close to the second camera device 108. According to an embodiment, the camera device 105 or 108 may include one or more lenses, an image sensor, and/or an image signal processor. The flash 109 may include, for example, a light emitting diode or a xenon lamp. According to an embodiment, the camera devices 105 and 108 may be arranged so that two or more lenses (e.g., wide-angle lens, super-wide-angle lens, or telephoto lens) and image sensors are positioned on one surface (e.g., first surface 111, second surface 112, third surface 121, or fourth surface 122) of the electronic device 100. In a certain embodiment, the camera devices 105 and 108 may include time-of-flight (TOF) lenses and/or an image sensor.

According to various embodiments, the key input device 106 (e.g., key button) may be disposed on the third side surface 113c of the first side member 113 of the first housing 110. In a certain embodiment, the key input device 106 may be disposed on at least one of the other side surfaces 113a and 113b of the first housing 110 and/or the side surfaces 123a, 123b and 123c of the second housing 120. In a certain embodiment, the electronic device 100 may not include some or all of the key input devices 106, and those not included key input devices 106 may be implemented in other forms, such as soft keys, on the flexible display 400. In a certain embodiment, the key input device 106 may be implemented by using a pressure sensor included in the flexible display 400.

According to various embodiments, some of the camera devices 105 and 108 (e.g., first camera device 105) or the sensor module 104 may be disposed to be exposed through the flexible display 400. For example, the first camera device 105 or the sensor module 104 may be arranged in the internal space of the electronic device 100 so as to be in contact with the external environment through an opening (e.g., through hole) formed at least partially in the flexible display 400. In another embodiment, some sensor modules 104 may be arranged in the internal space of the electronic device 100 so as to perform their functions without being visually exposed through the flexible display 400. For example, in this case, the opening of a region of the flexible display 400 facing the sensor module may be not needed.

With reference to FIG. 2B, the electronic device 100 may be operated to remain in an intermediate state through the hinge mechanism (e.g., hinge device 140 in FIG. 1B). In this case, the electronic device 100 may control the flexible display 400 to display different pieces of content on the display area corresponding to the first surface 111 and the display area corresponding to the third surface 121. According to an embodiment, the electronic device 100 may be operated substantially in an unfolding state (e.g., unfolding state of FIG. 1A) and/or substantially in a folding state (e.g., folding state of FIG. 2A) with respect to a specific inflection angle (e.g., angle between the first housing 110 and the second housing 120 in the intermediate state) through the hinge mechanism (e.g., hinge mechanism 140 in FIG. 1B). For example, when a pressing force is applied in the unfolding direction (B direction) in a state where the electronic device 100 is unfolded at a specific inflection angle, through the hinge mechanism (e.g., hinge mechanism 140 in FIG. 1B), the electronic device 100 may be transitioned to an unfolding state (e.g., unfolding state of FIG. 1A). For example, when a pressing force is applied in the folding direction (C direction) in a state where the electronic device 100 is unfolded at a specific inflection angle, through the hinge mechanism (e.g., hinge mechanism 140 in FIG. 1B), the electronic device 100 may be transitioned to a closed state (e.g., folding state of FIG. 2A). In one embodiment, the electronic device 100 may be operated to remain in an unfolded state at various angles (not shown) through the hinge mechanism (e.g., hinge mechanism 140 in FIG. 1B).

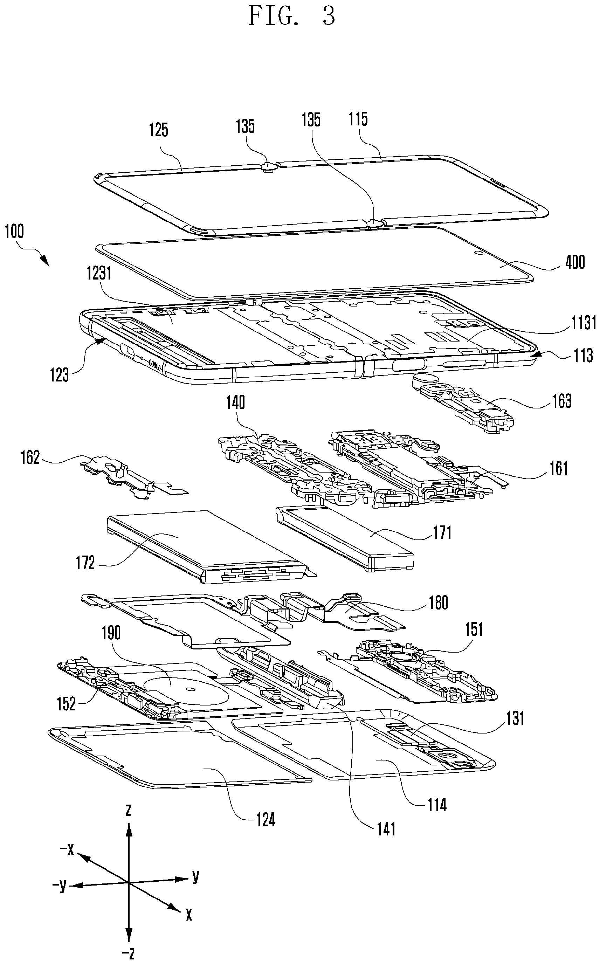

FIG. 3 is an exploded perspective view of the electronic device according to various embodiments of the disclosure.

With reference to FIG. 3, the electronic device 100 may include a first side member 113 (e.g., first side frame), a second side member 123 (e.g., second side frame), and a hinge mechanism 140 (e.g., hinge module) rotatably connecting the first side member 113 and the second side member 123. According to an embodiment, the electronic device 100 may include a first support member 1131 (e.g., first support member) at least partially extending from the first side member 113, and a second support member 1231 at least partially extending from the second side member 123. According to an embodiment, the first support member 1131 may be integrally formed with the first side member 113 or may be structurally coupled to the first side member 113. Similarly, the second support member 1231 may be integrally formed with the second side member 123 or may be structurally coupled to the second side member 123. According to an embodiment, the electronic device 100 may include a flexible display 400 disposed to be supported by the first support member 1131 and the second support member 1231. According to an embodiment, the electronic device 100 may include a first rear cover 114 that is coupled to the first side member 113 and provides a first space between itself and the first support member 1131, and a second rear cover 124 that is coupled to the second side member 123 and provides a second space between itself and the second support member 1231. In a certain embodiment, the first side member 113 and the first rear cover 114 may be integrally formed. In a certain embodiment, the second side member 123 and the second rear cover 124 may be integrally formed. According to an embodiment, the electronic device 100 may include a first housing 110 (e.g., first housing 110 in FIG. 1A) (e.g., first housing structure) provided through the first side member 113, the first support member 1131, and the first rear cover 114. According to an embodiment, the electronic device 100 may include a second housing (e.g., second housing 120 in FIG. 1A) (e.g., second housing structure) provided through the second side member 123, the second support member 1231, and the second rear cover 124. According to an embodiment, the electronic device 100 may include a sub-display 131 that is disposed to be visible from the outside through at least some region of the first rear cover 114.

According to various embodiments, the electronic device 100 may include a first substrate assembly 161 (e.g., main printed circuit board), a camera assembly 163, a first battery 171, or a first bracket 151, arranged in the first space between the first side member 113 and the first rear cover 114. According to an embodiment, the camera assembly 163 may include a plurality of camera devices (e.g., camera devices 105 and 108 in FIGS. 1A and 2A), and may be electrically connected to the first substrate assembly 161. According to an embodiment, the first bracket 151 may provide a support structure for supporting the first substrate assembly 161 and/or the camera assembly 163, and improved rigidity. According to an embodiment, the electronic device 100 may include a second board assembly 162 (e.g., sub printed circuit board), an antenna 190 (e.g., coil member), a second battery 172, or a second bracket 152, arranged in the second space between the second side member 123 and the second rear cover 124. According to an embodiment, the electronic device 100 may include a wiring member 180 (e.g., flexible printed circuit board (FPCB)) that is disposed to extend from the first substrate assembly 161 across the hinge mechanism 140 to a plurality of electronic components arranged between the second side member 123 and the second rear cover 124 to provide electrical connections. According to an embodiment, the antenna 190 may include a near field communication (NFC) antenna, a wireless charging antenna, and/or a magnetic secure transmission (MST) antenna. The antenna 190 may, for example, perform short-range communication with an external device or wirelessly transmit and receive power required for charging.

According to various embodiments, the electronic device 100 may include a hinge housing 141 (e.g., hinge cover) that supports the hinge mechanism 140 and is disposed so as to be exposed to the outside when the electronic device 100 is in the folding state (e.g., folding state of FIG. 2A) and be invisible from the outside by being pulled into the first space and/or the second space when the electronic device 100 is in the unfolding state (e.g., unfolding state of FIG. 1A).

According to various embodiments, the electronic device 100 may include a first protection cover 115 coupled along the periphery of the first side member 113. According to an embodiment, the electronic device 100 may include a second protection cover 125 coupled along the periphery of the second side member 123. According to an embodiment, in the flexible display 400, the periphery of a first flat portion (e.g., first flat portion 130a in FIG. 1B) may be protected by the first protection cover 115. According to an embodiment, in the flexible display 400, the periphery of a second flat portion (e.g., second flat portion 130b in FIG. 1B) may be protected by the second protection cover 125. According to an embodiment, the electronic device 100 may include a protection cap 135 disposed to protect the periphery of the third region (e.g., third region 130c in FIG. 1B) of the flexible display 400 corresponding to the hinge mechanism 140.

According to various embodiments, the first support member 1131 may include a first support surface 1131a facing a first direction (z-axis direction), and a second support surface 1131b facing a second direction (negative z-axis direction) opposite to the first direction. According to an embodiment, the second support member 1231 may include a third support surface 1231a facing the first direction, and a fourth support surface 1231b facing the second direction in the unfolding state. According to an embodiment, the flexible display 400 may be disposed to be supported by the first support surface 1131a of the first support member 1131 and the third support surface 1231a of the second support member 1231.

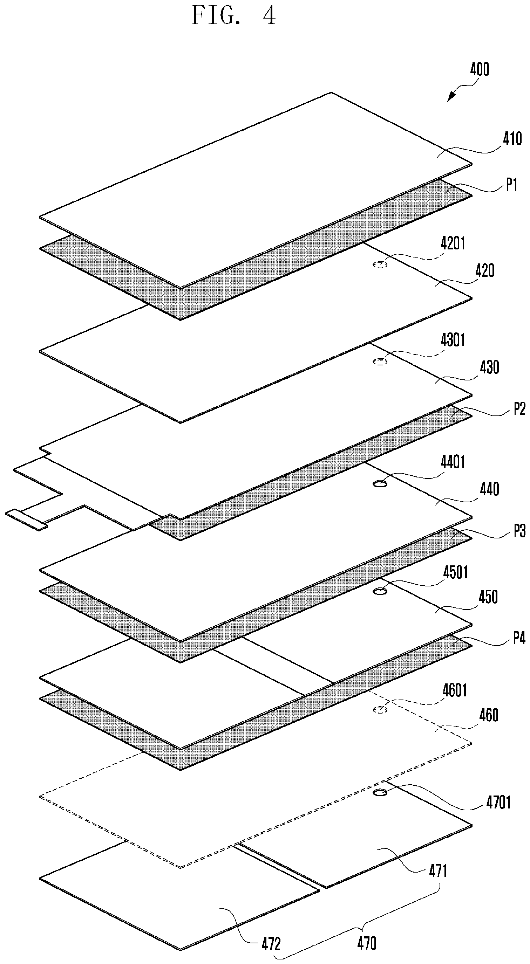

FIG. 4 is an exploded perspective view illustrating a flexible display according to various embodiments of the disclosure.

A display (e.g., the flexible display 400) according to embodiments of the disclosure may include an unbreakable (UB) type OLED display (e.g., a curved display).

Referring to FIG. 4, the flexible display 400 may include a window layer 410 and also include a polarization layer 420 (polarizer (POL)) (e.g., a polarizing film), a display panel 430, a polymer layer 440, a metal sheet layer 450, and a reinforcing plate 470 which are sequentially disposed on the rear surface of the window layer 410. In some embodiments, the flexible display 400 may further include a digitizer 460 disposed between the polymer layer 440 and the metal sheet layer 450 or between the metal sheet layer 450 and the reinforcing plate 470.

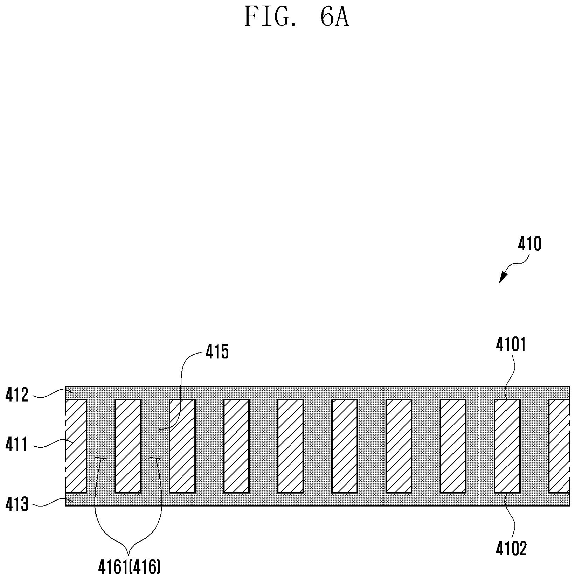

According to various embodiments, the window layer 410 may include a glass layer (e.g., a glass layer 411 in FIG. 6A). According to an embodiment, the glass layer (e.g., the glass layer 411 in FIG. 6A) may have a plurality of openings (e.g., a plurality of first openings 4161 in FIG. 6A) disposed in a region corresponding to a bendable third portion (e.g., the third portion 130c in FIG. 1B) of the flexible display 400, so that the bending characteristic of the flexible display 400 can be improved.

According to various embodiments, the window layer 410, the polarization layer 420, the display panel 430, the polymer layer 440, and the metal sheet layer 450 may be disposed to cross at least a portion of a first surface (e.g., the first surface 111 in FIG. 1A) of a first housing (e.g., the first housing 110 in FIG. 1A) and a third surface (e.g., the third surface 121 in FIG. 1A) of a second housing (e.g., the second housing 120 in FIG. 1A). According to an embodiment, the reinforcing plate 470 may include a first reinforcing plate 471 positioned the first housing (e.g., the first housing 110 in FIG. 1A) and a second reinforcing plate 472 positioned the second housing (e.g., the second housing 120 in FIG. 1A). According to an embodiment, the window layer 410, the polarization layer 420, the display panel 430, the polymer layer 440, the metal sheet layer 450, and the reinforcing plate 470 may be attached to each other through adhesives P1, P2, P3, and P4. For example, the adhesives P1, P2, P3, and P4 may include at least one of an optical clear adhesive (OCA), a pressure sensitive adhesive (PSA), a heat-responsive adhesive, a normal adhesive, and a double-sided tape.

According to various embodiments, the display panel 430 may include a plurality of pixels and a wiring structure (e.g., an electrode pattern). According to an embodiment, the polarization layer 420 may selectively pass light generated from a light source of the display panel 430 and vibrating in a predetermined direction. According to an embodiment, the display panel 430 and the polarization layer 420 may be integrally formed. According to an embodiment, the flexible display 400 may include a touch panel.

According to various embodiments, the polymer layer 440 may be disposed under the display panel 430 to provide a dark background for ensuring visibility of the display panel 430, and formed of a buffer material for a buffering action. In some embodiments, for waterproofing the flexible display 400, the polymer layer 440 may be removed or disposed under the metal sheet layer 450.

According to various embodiments, the metal sheet layer 450 may be formed in a shape that provides bending characteristics to the flexible display 400. According to an embodiment, the metal sheet layer 450 may include at least one of steel use stainless (SUS) (e.g., stainless steel (STS)), Cu, Al, or a metal clad (e.g., a stack member in which SUS and Al are alternately disposed). In some embodiments, the metal sheet layer 450 may include any other alloy material. In some embodiments, the metal sheet layer 450 can help reinforce the rigidity of an electronic device (e.g., the electronic device 100 in FIG. 1A), shield ambient noise, and dissipate heat emitted from nearby heat-generating components.

According to various embodiments, the flexible display 400 may include at least one functional member disposed between the polymer layer 440 and the metal sheet layer 450 or below the metal sheet layer 450. According to an embodiment, the functional member may include a graphite sheet for heat dissipation, an added display, a force-touch FPCB, a fingerprint sensor FPCB, an antenna radiator for communication, or a conductive/non-conductive tape. According to an embodiment, when bending is not possible, the functional member may be individually disposed in the first housing (e.g., the first housing 110 in FIG. 1A) and the second housing (e.g., the second housing 120 in FIG. 1A). According to an embodiment, when bending is possible, the functional member may be disposed from the first housing (e.g., the first housing 110 in FIG. 1A) up to at least a portion of the second housing (e.g., the second housing 120 in FIG. 1A), passing through a hinge device (e.g., the hinge device 140 in FIG. 1B).

According to various embodiments, the electronic device (e.g., the electronic device 100 in FIG. 1A) may include a camera device (e.g., the first camera device 105 in FIG. 1A) that is disposed under the flexible display 400 and detects an external environment through the flexible display 400. In some embodiments, the electronic device (e.g., the electronic device 100 in FIG. 1A) may include at least one sensor module (e.g., the sensor module 104 in FIG. 1A) (e.g., an illuminance sensor, a proximity sensor, or a TOF sensor) disposed under the flexible display 400. According to an embodiment, the polarization layer 420, the display panel 430, the polymer layer 440, the metal sheet layer 450, and the reinforcing plate 470 may have through-holes 4201, 4301, 4401, 4501, and 4601. In some embodiments, the display panel 430 and/or the polarization layer 420 may not need the through-holes 4201 and 4301 through adjustment in the transmittance of corresponding regions. In some embodiments, the sizes of the through-holes 4201, 4301, 4401, 4501, and 4601 may be determined based on the size of the camera device (e.g., the first camera device 105 in FIG. 1A) and/or the angle of view of the camera device (e.g., the first camera device 105 in FIG. 1A), and the respective sizes of the through-holes 4201, 4301, 4401, 4501, and 4601 may be different from each other.

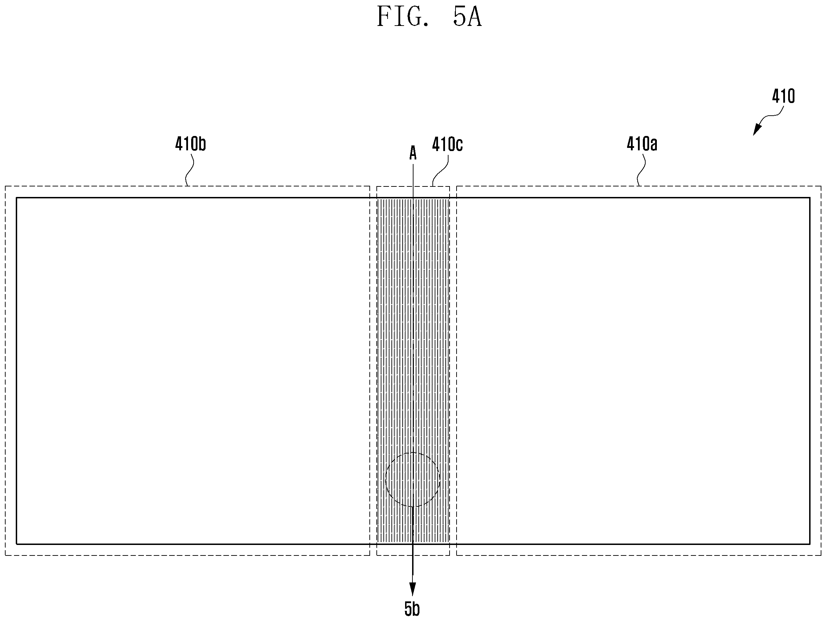

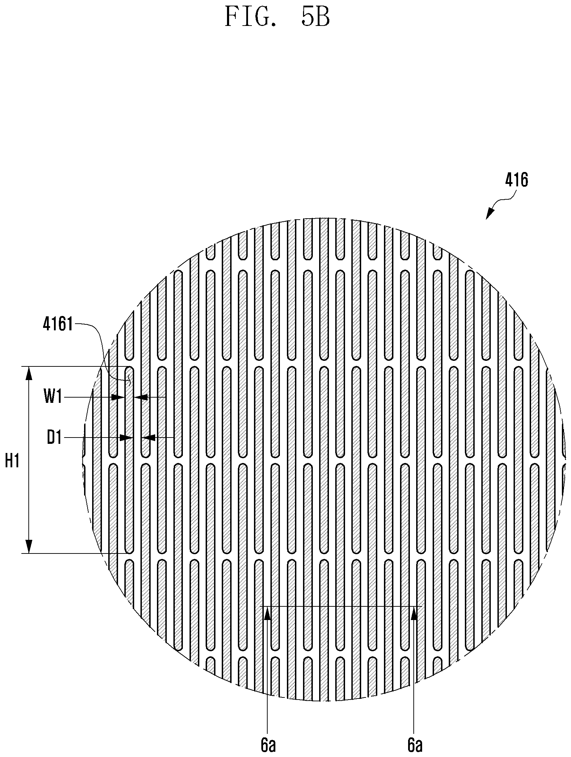

FIG. 5A is a plan view illustrating a window layer according to various embodiments of the disclosure. FIG. 5B is an enlarged view illustrating a region 5b of FIG. 5A according to various embodiments of the disclosure.

Referring to FIGS. 5A and 5B, the window layer 410 may include a first region 410a corresponding to a first portion (e.g., the first portion 130a in FIG. 1B) of a flexible display positioned in a first housing (e.g., the first housing 110 in FIG. 1B) of an electronic device (e.g., the electronic device 100 in FIG. 1B), a second region 410b corresponding to a second portion (e.g., the second portion 130b in FIG. 1B) of a flexible display positioned in a second housing (e.g., the second housing 120 in FIG. 1B), and a third region 410c corresponding to a third portion (e.g., the third portion 130c in FIG. 1B) of a flexible display positioned proximate to a hinge device (e.g., the hinge device 140 in FIG. 1B). According to an embodiment, the third region 410c may be bendable together with a display panel (e.g., the display panel 430 in FIG. 4) in response to a folding operation of the electronic device (e.g., the electronic device 100 in FIG. 1B).

According to various embodiments, the third region 410c of the window layer 410 may have a first pattern 416 including a plurality of first openings 4161. According to an embodiment, the plurality of first openings 4161 may be formed in a glass layer (e.g., the glass layer 411 in FIG. 6A) disposed as a component of the window layer 410. According to an embodiment, the plurality of first openings 4161 of the first pattern 416 may have a shape, an arrangement structure, and an arrangement density, which may determine the bending characteristic of the flexible display 400. For example, as shown, each of the plurality of first openings 4161 may be formed in a slit structure that has a first length H1 along a folding axis (the axis A), a first width W1 smaller than the first length H1, and a first specified interval D1 to each other. According to an embodiment, based on the first pattern 416, the third region 410c may provide the elastic force and the bending characteristic and also reinforce the rigidity.

FIG. 6A is a partial cross-sectional view of the window layer taken along a line 6a-6a of FIG. 5B according to various embodiments of the disclosure.

Referring to FIG. 6A, the window layer 410 may include the glass layer 411 having a first surface 4101 facing the outside of the electronic device (e.g., the electronic device 100 in FIG. 1A) and a second surface 4102 facing the display panel (e.g., the display panel 430 in FIG. 4) opposite to the first surface 4101. According to an embodiment, the glass layer 411 may be formed to have a thickness ranging from 0.1 mm to 0.5 mm, thereby helping to reinforce the rigidity of the flexible display (e.g., the flexible display 400 in FIG. 4). According to an embodiment, the window layer 410 may have the plurality of first openings 4161 formed to penetrate from the first surface 4101 to the second surface 4102 of the glass layer 411. According to an embodiment, the plurality of first openings 4161 may be formed through a process such as laser or etching.

According to various embodiments, the window layer 410 may include a filling member 415 that fills the plurality of first openings 4161 formed in the glass layer 411. According to an embodiment, the filling member 415 may include a material having elasticity. According to an embodiment, the filling member 415 may include a substantially transparent material, which initially fills the plurality of first openings 4161 in the form of a liquid or semi-solid state, and then cured over time, by irradiation with light, or by chemical treatment. According to an embodiment, the filling member 415 may include a resin such as silicone, urethane, or acrylic. According to an embodiment, the filling member 415 may include a material having a refractive index that is substantially equal to that of the glass layer 411. According to an embodiment, the window layer 410 may include a first planarization layer 412 stacked on the first surface 4101 to a specified thickness, and a second planarization layer 413 stacked on the second surface 4102 to a specified thickness. In some embodiments, the second planarization layer 413 may be omitted. According to an embodiment, the first and second planarization layers 412 and 413 may be disposed to allow the first and second surfaces 4101 and 4102 roughened by the filling member 415 filled in the plurality of first openings 4161 to have substantially flat surfaces, and to protect the glass layer 411. According to an embodiment, the first and second planarization layers 412 and 413 may be formed of a material identical with that of the filling member 415. In this case, the first and second planarization layers 412 and 413 may be formed together when the filling member 415 is filled. In some embodiments, the first and second planarization layers 412 and 413 may be formed of a material different from that of the filling member 415. According to an embodiment, the first and second planarization layers 412 and 413 may be formed to have a thickness in the range of 0.01 mm to 0.1 mm. According to an embodiment, the first and second planarization layers 412 and 413 may be formed to have a hardness value in the range of 20 Shore D to 50 Shore D. According to an embodiment, the first planarization layer 412, the second planarization layer 413, and/or a hard coating layer 417 may be stacked to extend up to the outer surface of the glass layer 411 corresponding to the first and second regions 410a and 410b of the window layer 410.

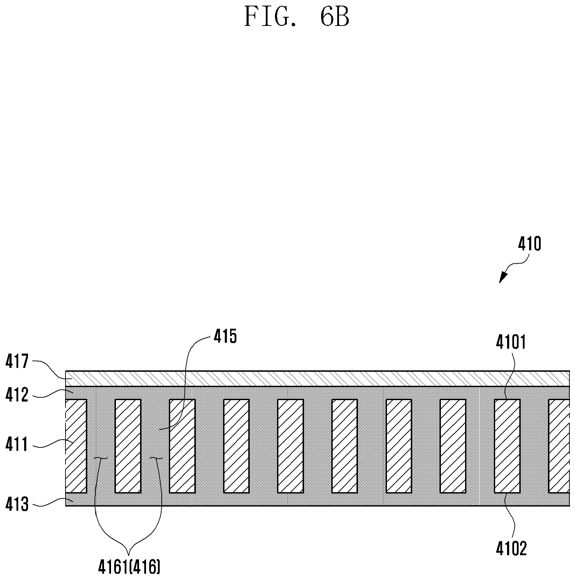

FIG. 6B is a partial cross-sectional view of the window layer according to various embodiments of the disclosure.

Referring to FIG. 6B, the window layer 410 may further include a hard coating layer 417 stacked on the first planarization layer 412. According to an embodiment, the hard coating layer 417 may be formed of a material having a higher hardness value than that of the first planarization layer 412, thereby improving scratch resistance for the flexible display (e.g., the flexible display 400 in FIG. 4). According to an embodiment, the hard coating layer 417 may be formed to have a thickness in the range of 0.01 mm to 0.05 mm. According to an embodiment, the hard coating layer 417 may be formed to have a hardness value in the range of 60 Shore D to 90 Shore D.

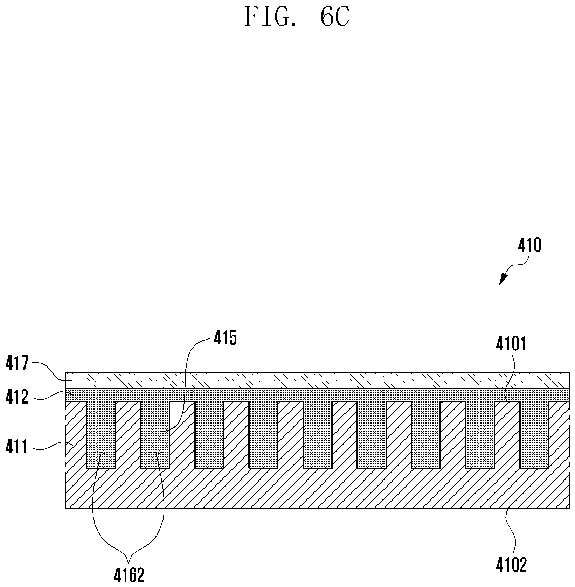

FIG. 6C is a partial cross-sectional view of the window layer according to various embodiments of the disclosure.

Referring to FIG. 6C, the window layer 410 may include a plurality of recesses 4162 formed to have a specified interval and a specified depth in a direction from the first surface 4101 to the second surface 4102 of the glass layer 411. According to an embodiment, the window layer 410 may include the filling member 415 filled in the plurality of recesses 4162. According to an embodiment, the window layer 410 may include the planarization layer 412 stacked on the first surface 4101 and the hard coating layer 417 stacked on the planarization layer 412. According to an embodiment, physical properties of the glass layer 411, the filling member 415, the planarization layer 412, and the hard coating layer 417 may be substantially the same as those of the window layer 410 in FIGS. 6A and 6B. In some embodiments, the window layer 410 may include a plurality of recesses formed at a specified interval and a specified depth in a direction from the second surface 4102 to the first surface 4101 of the glass layer 411. In some embodiments, the window layer 410 may include a glass layer to which the plurality of recesses 4162 and the plurality of openings 4161 described above are applied together.

By applying the glass layer 411 having a sufficient thickness to the window layer 410 according to embodiments of the disclosure, the rigidity of the flexible display 400 may be ensured. In addition, the bending characteristics may be improved through the plurality of openings 4161 and/or the plurality of recesses 4162 formed in the bendable third region (e.g., the third region 410c in FIG. 5A) of the glass layer 411 and filled with the filling member 415.

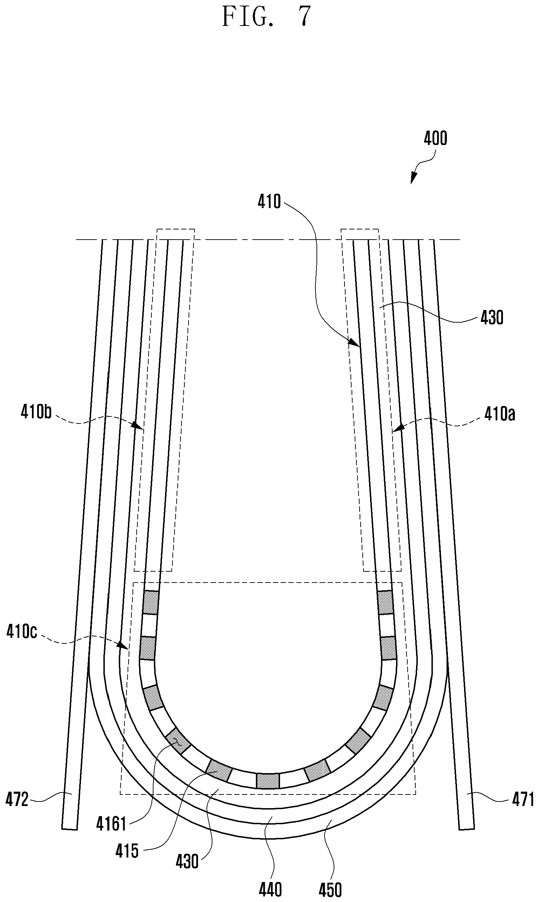

FIG. 7 is a view illustrating a folding state of a flexible display according to various embodiments of the disclosure.

Referring to FIG. 7, when the electronic device (e.g., the electronic device 100 in FIG. 2A) is in the folding state, the flexible display 400 may be deformed such that the window layer 410, the display panel 430, the subsidiary material layer 440, and the metal sheet layer 450 may be folded together except for the first and second reinforcing plates 471 and 472 disposed to be separated from each other. According to an embodiment, in the folding state, the window layer 410 may be folded such that the first and second regions 410a and 410b generally face each other and the third region 410c has a specified curvature. In this case, the plurality of openings 4161 filled with the filling member 415 can improve bendability in the third region 410c of the window layer 410.

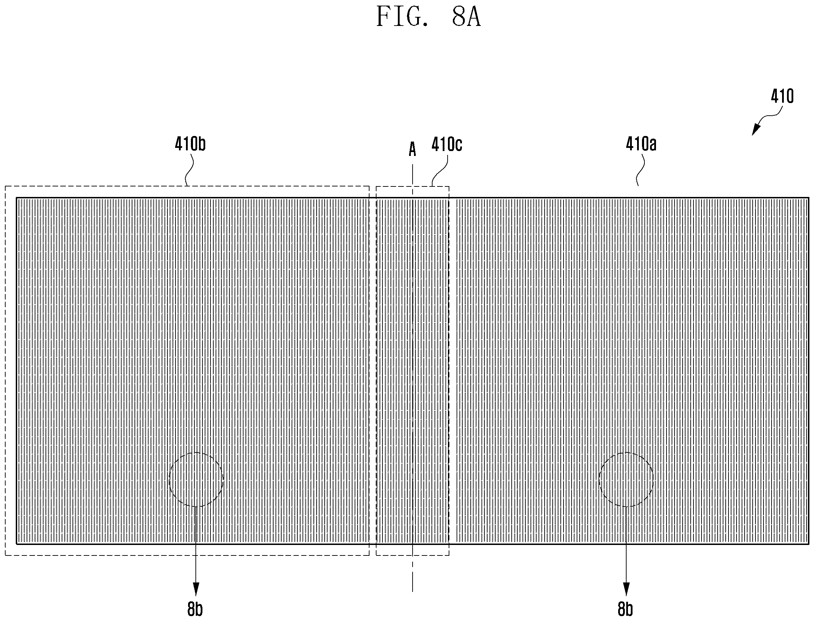

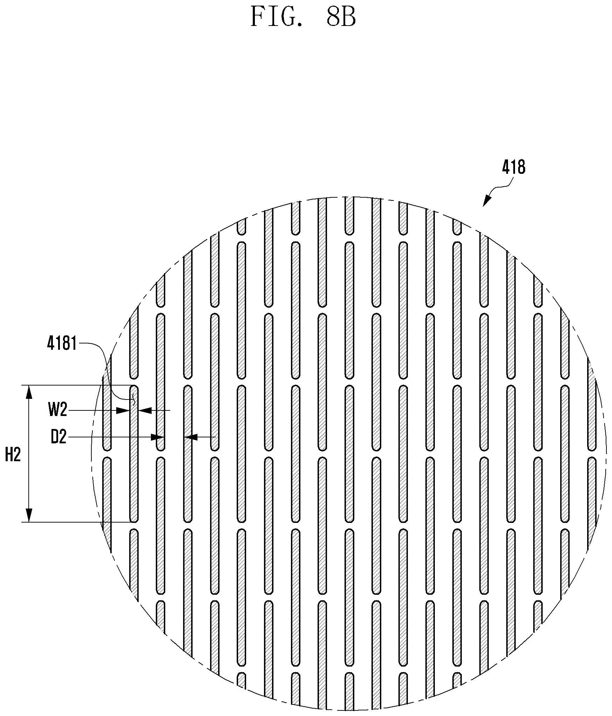

FIG. 8A is a plan view of a window layer according to various embodiments of the disclosure. FIG. 8B is an enlarged view illustrating a region 8b of FIG. 8A according to various embodiments of the disclosure.

Referring to FIGS. 8A and 8B, the window layer 410 may have a second pattern 418 including a plurality of second openings 4181 formed in a glass layer (e.g., the glass layer 411 in FIG. 6A) in the first and second regions 410a and 410b. In this case, the plurality of second openings 4181 may be filled with a filling member (e.g., the filling member 415 in FIG. 6A) like the plurality of first openings 4161 disposed in the third region 410c described above, and a first planarization layer (e.g., the first planarization layer 412 in FIG. 6A), a second planarization layer (e.g., the second planarization layer 413 in FIG. 6A), and/or a hard coating layer (e.g., the hard coating layer 417 in FIG. 6A) may be included.

According to various embodiments, each of the plurality of second openings 4181 may be formed in a slit structure that has a second length H2 along a folding axis (the axis A), a second width W2 smaller than the second length H2, and a second specified interval D2 to each other. According to an embodiment, the plurality of second openings 4181 may be substantially identical in a shape and/or an arrangement structure with the plurality of first openings 4161. In some embodiments, the plurality of second openings 4181 may have a shape and/or arrangement structure different from that of the plurality of first openings 4161. For example, in order to reinforce rigidity, the second pattern 418 may be formed to have a second opening ratio (e.g., an opening ratio per unit area) smaller than a first opening ratio of the first pattern (e.g., the first pattern 416 in FIG. 5B). This may be because the first and second regions 410a and 410b provided with the second pattern 418 require high rigidity to support the flexible display 400. For example, when the unit opening 4161 of the first pattern (e.g., the first pattern 416 in FIG. 5B) and the unit opening 4181 of the second pattern 418 have the same shape, the first length H1 may be formed to be greater than the second length H2, the first width W1 may be formed to be greater than the second width W2, or the first interval D1 may be formed to be smaller than the second interval D2.

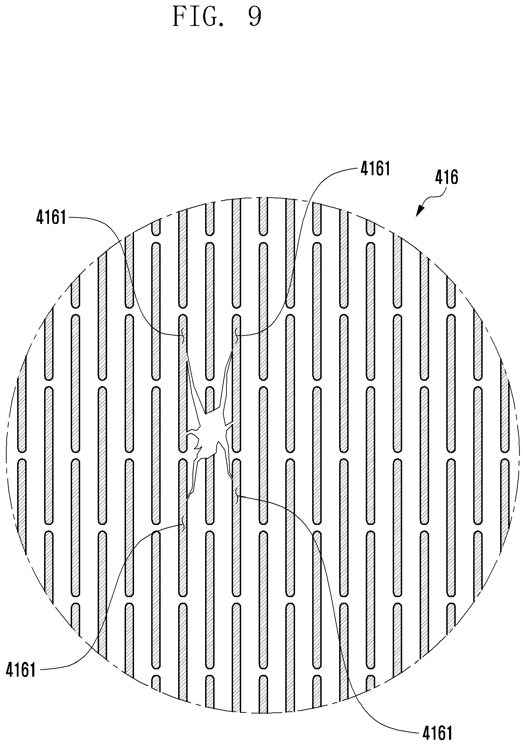

FIG. 9 is a schematic view illustrating a crack generated in a window layer according to various embodiments of the disclosure.

Referring to FIG. 9, when the glass layer (e.g., the glass layer 411 in FIG. 6A) is broken by an external impact, the plurality of openings 4161 disposed in the window layer (e.g., the window layer 410 in FIG. 5A) may perform a function of preventing cracks from developing from a breakage point. For example, when breakage occurs due to impact at any point of the window layer (e.g., the window layer 410 in FIG. 5A), cracks generated from the breakage point may only advance up to neighbor openings 4161 and blocked from advancing further.

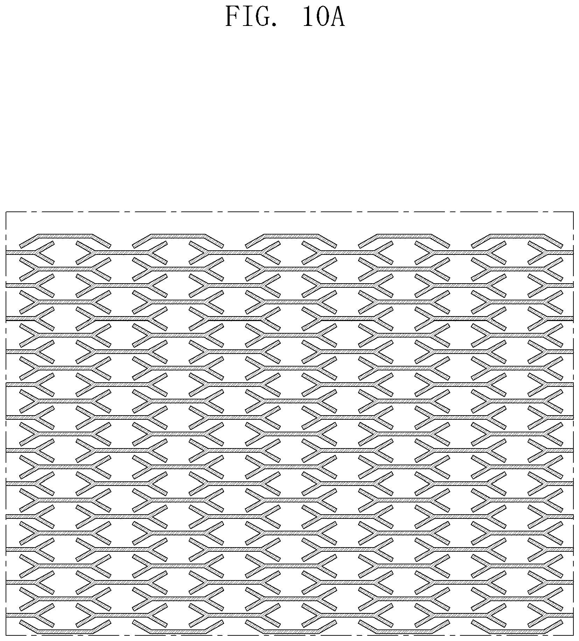

FIGS. 10A to 10D are views illustrating patterns formed in a window layer according to various embodiments of the disclosure.

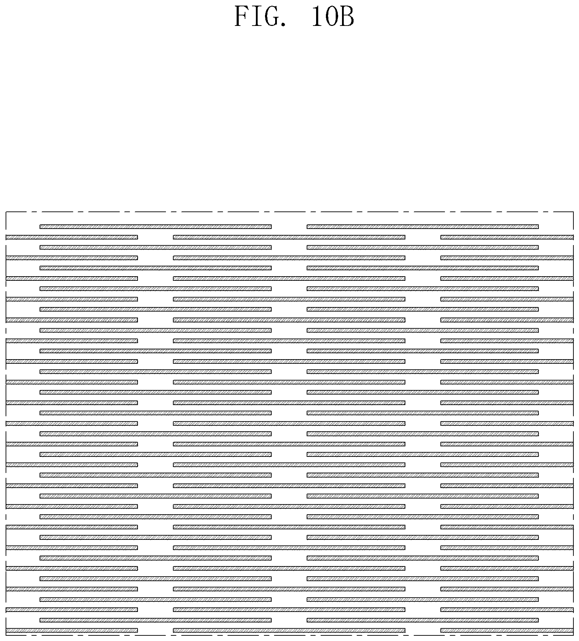

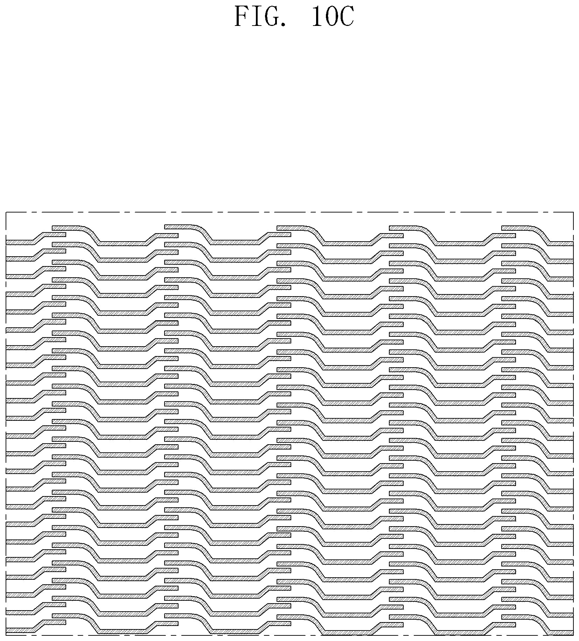

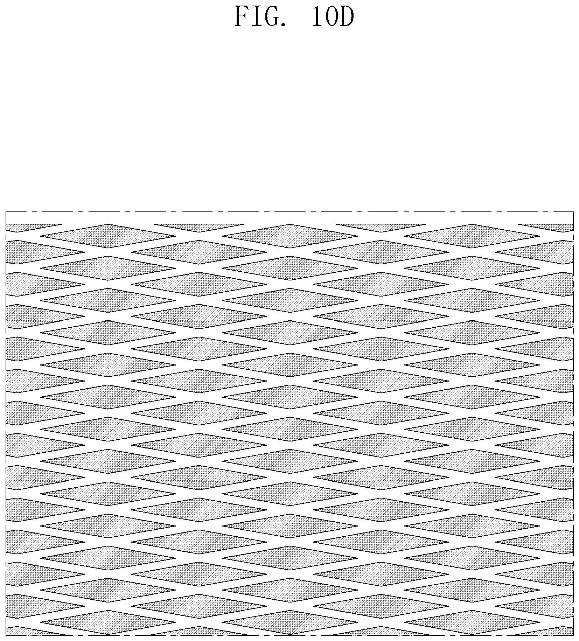

The plurality of openings according to embodiments of the disclosure may be formed in various shapes. For example, the plurality of openings may be formed to have a shape that unit openings having both branched sides are alternately arranged with each other as shown in FIG. 10A, a shape that linear unit openings are alternately arranged as shown in FIG. 10B, a shape that non-linear unit openings are alternately arranged as shown in FIG. 10C, or a shape that unit openings having a specific figure form (e.g., rhombus form) are arranged at a specified interval as shown in FIG. 10D.

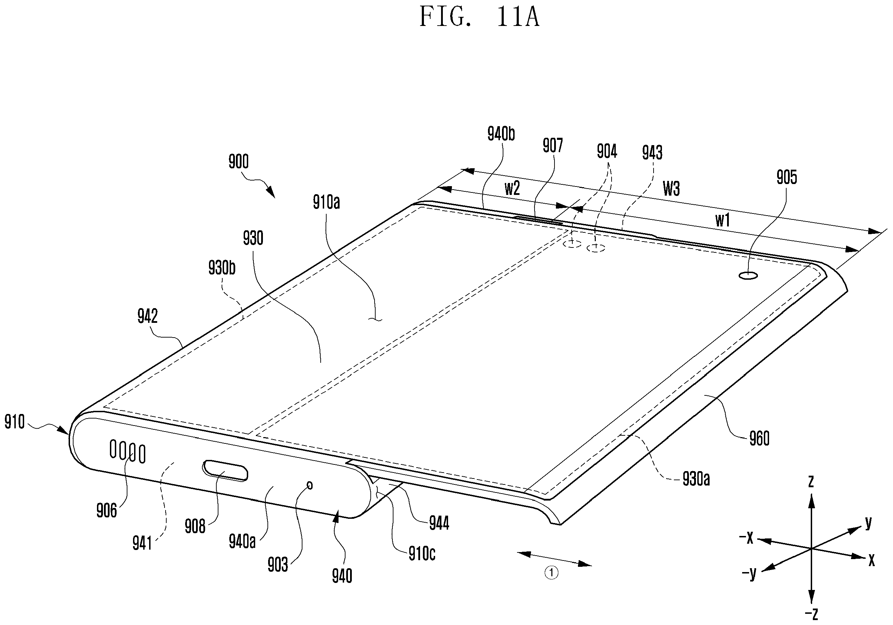

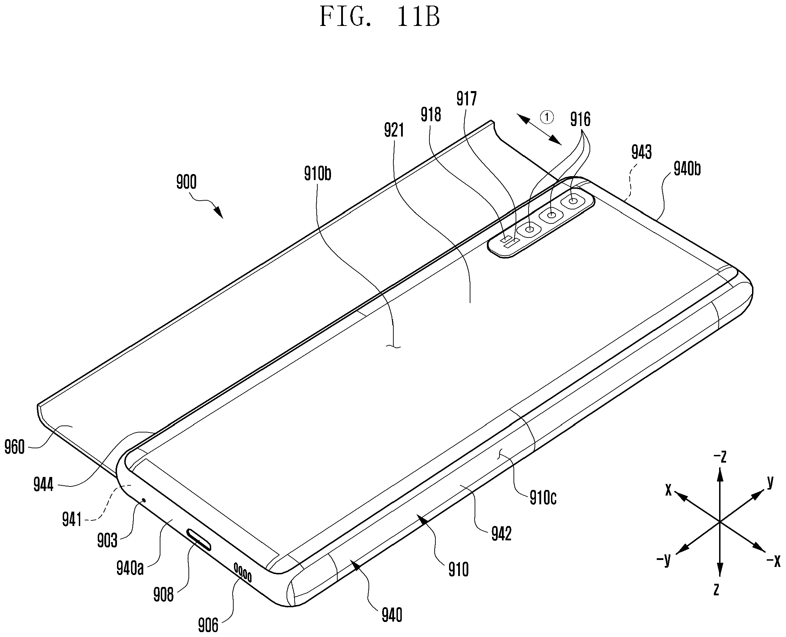

FIGS. 11A and 11B are views illustrating the front and rear of an electronic device (e.g., a slidable electronic device or a rollable electronic device) according to various embodiments of the disclosure.

Referring to FIGS. 11A and 11B, the electronic device 900 may include a housing 910 (e.g., a housing structure) and a slide plate 960 (e.g., a slide structure) movably combined at least in part with the housing 910 and supporting at least a portion of a flexible display 930. According to an embodiment, the slide plate 960 may include a bendable hinge rail (e.g., a multi-joint hinge or multi-bar assembly) coupled to one end and supporting at least a portion of the flexible display 930. For example, when the slide plate 960 performs a sliding operation on the housing 910, the hinge rail may be at least partially introduced into the inner space of the housing 910 while supporting the flexible display 930. According to an embodiment, the electronic device 900 may include the housing 910 (e.g., a housing structure) that includes a lateral member 940 having a front surface 910a (e.g., a first surface) facing a first direction (e.g., the Z axis direction), a rear surface 910b (e.g., a second surface) facing a second direction (e.g., the -Z axis direction) opposite to the first direction, and a lateral surface 910c surrounding a space between the front and rear surfaces 910a and 910b and exposed at least in part to the outside. According to an embodiment, the rear surface 910b may be formed through a rear cover 921 combined with the housing 910. According to an embodiment, the rear cover 921 may be formed of a polymer, coated or colored glass, ceramic, metal (e.g., aluminum, stainless steel (STS), or magnesium), or any combination thereof. In some embodiments, the rear surface 921 may be formed integrally with the housing 910. According to an embodiment, at least a portion of the lateral surface 910c may be disposed to be exposed to the outside through the housing 910. According to an embodiment, at least a portion of the slide plate 960 together with a fourth lateral surface 944 may form at least a portion of the lateral surface 910c.

According to various embodiments, the lateral member 940 may have a first lateral surface 941 having a first length, a second lateral surface 942 extended from the first lateral surface 941 to have a second length greater than the first length in a direction perpendicular to the first lateral surface 941, a third lateral surface 943 extended from the second lateral surface 942 in parallel with the first lateral surface 941 and having the first length, and a fourth lateral surface 944 extended from the third lateral surface 943 in parallel with the second lateral surface 942 and having the second length. According to an embodiment, the slide plate 960 supports the flexible display 930 and may increase the display area of the flexible display 930 through a slide-out in a direction (e.g., the X axis direction) from the second lateral surface 942 to the fourth lateral surface 944, or decrease the display area of the flexible display 930 through a slide-in in a direction (e.g., the -X axis direction) from the fourth lateral surface 944 to the second lateral surface 942. According to an embodiment, the electronic device 900 may include a first lateral cover 940a and a second lateral cover 940b for covering the first lateral surface 941 and the third lateral surface 943. According to an embodiment, the first and third lateral surfaces 941 and 943 may be disposed so as not to be exposed to the outside through the first and second lateral covers 940a and 940b.

According to various embodiments, the electronic device 900 may include the flexible display 930 disposed to be supported by the slide plate 960. According to an embodiment, the flexible display 930 may include a first portion 930a (e.g., a flat portion) supported by the slide plate 960, and a second portion 930b (e.g., a bendable portion) extended from the first portion 930a and supported by the hinge rail. According to an embodiment, the second portion 930b of the flexible display 930 may be inserted into the inner space of the housing 910 in a slide-in state (e.g., a state that the slide plate 960 is introduced into the housing 910) of the electronic device 900 and disposed so as not to be exposed to the outside, and may be exposed to the outside in a slide-out state (e.g., a state that the slide plate 960 is drawn out from the housing 910) of the electronic device 900 so as to be extended from the first portion 930a while being supported by the hinge rail. Therefore, the electronic device 900 may include a rollable type or slidable type electronic device in which the area of a display screen of the flexible display 930 is varied through the movement of the slide plate 960 from the housing 910.

According to various embodiments, the slide plate 960 may be combined to be movable in a sliding scheme of sliding-in or sliding-out at least in part into or from the housing 910. For example, the electronic device 900 may be configured to have a first width W1 from the second lateral surface 942 to the fourth lateral surface 944 in the slide-in state. According to an embodiment, in the slide-out state of the slide plate 960, the electronic device 900 may be operated to have a third width W3 greater than the first width W1 as the hinge rail introduced in the housing 910 moves to the outside of the electronic device so as to have an additional second width W2.

According to various embodiments, the slide plate 960 may be operated through a user's manipulation. In some embodiments, the slide plate 960 may be automatically operated through a driving mechanism disposed in the inner space of the housing 910. According to an embodiment, the electronic device 900 may be configured to control the operation of the slide plate 960 through the driving mechanism in response to detecting an event for a change between open/closed states of the electronic device 900 through a processor (e.g., the processor 120 in FIG. 1). In some embodiments, the processor (e.g., the processor 120 in FIG. 1) of the electronic device 900 may also control the flexible display 930 to display an object in various manners and execute an application in response to the display area of the flexible display 930 varying according to an open state, a closed state, or an intermediate state of the slide plate 960.

According to various embodiments, the electronic device 900 may include at least one of an input device 903, sound output devices 906 and 907, sensor modules 904 and 917, camera modules 905 and 916, a connector port 908, a key input device, or an indicator. In another embodiment, the electronic device 900 may omit at least one of the above-described components or further include other components.

According to various embodiments, the input device 903 may include a microphone. In some embodiments, the input device 903 may include a plurality of microphones disposed to detect the direction of a sound. The sound output devices 906 and 907 may include speakers. The sound output devices 906 and 907 may include an external speaker 906 and a call receiver 907. In another embodiment, the sound output devices 906 and 907 may include a speaker (e.g., a piezo speaker) that operates without a separate speaker hole.

According to various embodiments, the sensor modules 904 and 917 may generate an electrical signal or data value corresponding to an internal operating state of the electronic device 900 or an external environmental state. The sensor modules 904 and 917 may include, for example, a first sensor module 904 (e.g., a proximity sensor or an illuminance sensor) disposed on the front surface of the electronic device and/or a second sensor module 917 (e.g., an HRM sensor) disposed on the rear surface. According to an embodiment, the first sensor module 904 may be disposed under the flexible display 930 on the front surface 910a of the electronic device 900. According to an embodiment, the first sensor module 904 may further include at least one of a proximity sensor, an illuminance sensor, a time of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera devices 905 and 916 may include a first camera device 905 disposed on the front surface 910a of the electronic device 900 and a second camera device 916 disposed on the rear surface 910b. According to an embodiment, the electronic device 900 may include a flash 918 positioned near the second camera device 916. According to an embodiment, the camera devices 905 and 916 may include one or more lenses, an image sensor, and/or an image signal processor. According to an embodiment, the first camera device 905 may be disposed under the flexible display 930 and configured to photograph a subject through a portion of an active region of the flexible display 930. According to an embodiment, the flash 918 may include, for example, a light emitting diode or a xenon lamp. In some embodiments, two or more lenses (wide angle and telephoto lenses) and image sensors may be disposed on one surface of the electronic device 900.

According to various embodiments, the electronic device 900 may include at least one antenna. According to an embodiment, the at least one antenna may wirelessly communicate with, for example, an external electronic device (e.g., the electronic device in FIG. 1) or wirelessly transmit/receive power required for charging. According to an embodiment, the antenna may include a legacy antenna, a mmWave antenna, a near field communication (NFC) antenna, a wireless charging antenna, and/or a magnetic secure transmission (MST) antenna.

According to various embodiments, the housing 910 (e.g., a lateral frame) may be formed at least in part of a conductive material (e.g., a metal material). According to an embodiment, in the housing 910, at least the first lateral surface 941 and/or the third lateral surface 943, which are not involved in driving the slide plate 960, may be formed of a conductive material and divided into a plurality of conductive portions electrically insulated through a nonconductive material. According to an embodiment, the plurality of conductive portions may be used as antennas that operate in various frequency bands by being electrically connected to a wireless communication circuit (e.g., the wireless communication module 192 in FIG. 1) disposed inside the electronic device 900.

According to various embodiments, the flexible display 930 may include a window layer (e.g., the window layer 410 in FIG. 6A) stacked on an outer surface of a display panel. According to an embodiment, the window layer (e.g., the window layer 410 in FIG. 6A) may include a plurality of openings (e.g., the plurality of openings 4161 in FIG. 6A) formed in a glass layer (e.g., the glass layer 411 in FIG. 6A) having a sufficient thickness and a filling member (e.g., the filling member 415 in FIG. 6A) filled therein in a region facing the second portion 930b bendable during a sliding operation of the slide plate 960 in a specified direction (direction ①), thereby ensuring the rigidity and bendability of the flexible display 930.

According to various embodiments, an electronic device (e.g., the electronic device 100 in FIG. 1A) may include a first housing (e.g., the first housing 110 in FIG. 1A), a second housing (e.g., the second housing 120 in FIG. 1A) foldably connected to the first housing through a hinge device (e.g., the hinge device 140 in FIG. 1A), and a flexible display (e.g., the flexible display 400 in FIG. 1A) including a first portion (e.g., the first portion 130a in FIG. 1B) positioned in the first housing, a second portion (e.g., the second portion 130b in FIG. 1B) positioned in the second housing, and a bendable third portion (e.g., the third portion 130c in FIG. 1B) connecting the first portion and configured to be bendable. The flexible display may include a window layer (e.g., the window layer 410 in FIG. 6A) including a first region (e.g., the first region 410a in FIG. 5A) corresponding to the first portion, a second region (e.g., the second region 410b in FIG. 5A) corresponding to the second portion, and a third region (e.g., the third region 410c in FIG. 5A) corresponding to the third portion and configured to be bendable, a display panel (e.g., the display panel 430 in FIG. 4) disposed under the window layer, and a subsidiary material layer (e.g., the polymer layer 440 and the metal sheet layer 450 in FIG. 4A) disposed under the display panel. The window layer may include a glass layer (e.g., the glass layer 411 in FIG. 6A) including, in the third region, a plurality of first openings (e.g., the plurality of first openings 4161 in FIG. 6A) at specified intervals and the plurality of first openings are filled with a filling member (e.g., the filling member 415 in FIG. 6A).

According to various embodiments, a bending characteristic of the third region of the window layer may be determined based on a refractive index of the filling member.

According to various embodiments, the refractive index of the filling member may be substantially equal to a refractive index of the glass layer.

According to various embodiments, the glass layer may have a first surface facing an outside of the electronic device and a second surface facing a direction of the display panel, and the window layer further includes at least one planarization layer stacked on the first surface or the second surface may be further included.

According to various embodiments, the at least one planarization layer may be formed of a material identical with the filling member.

According to various embodiments, the at least one planarization layer may be formed of a material different from the filling member.

According to various embodiments, the at least one planarization layer may include a first planarization layer stacked on the first surface of the glass layer and a second planarization layer stacked on the second surface of the glass layer, and the window layer may further include a hard coating layer stacked on the first planarization layer.

According to various embodiments, the hard coating layer may be formed to have a thickness in a range of 0.01 mm to 0.05 mm.

According to various embodiments, the hard coating layer may be formed to have a hardness value in a range of 60 Shore D to 90 Shore D.

According to various embodiments, the at least one planarization layer may be formed to have a thickness in a range of 0.01 mm to 0.1 mm.

According to various embodiments, the at least one planarization layer may be formed to have a hardness value in a range of 20 Shore D to 50 Shore D.

According to various embodiments, the glass layer may be formed to have a thickness in a range of 0.1 mm to 0.5 mm.

According to various embodiments, a bending characteristic of the third region of the window layer may be determined through a shape or an arrangement structure of the plurality of first openings.

According to various embodiments, the plurality of first openings may be arranged to have a length in a parallel direction along a bending axis of the third region.

According to various embodiments, the plurality of first openings and the plurality of second openings may be arranged to have different arrangement densities for each region.

According to various embodiments, a plurality of second openings formed in the first and second regions may be included, and the plurality of first openings may be filled with the filling member.

According to various embodiments, the plurality of second openings may be substantially identical in a shape or an arrangement structure with the plurality of first openings.

According to various embodiments, an electronic device may include at least one bendable housing, and a flexible display including a bending region that is bendable at least in part through a support of the at least one housing. The flexible display may include a window layer, a display panel disposed under the window layer, and a subsidiary material layer disposed under the display panel. The window layer may include a glass layer including, in a region corresponding to the bending region, a plurality of openings at specified intervals and wherein the plurality of openings are filled with a filling member filled in the plurality of openings.

According to various embodiments, the glass layer may have a first surface facing an outside of the electronic device and a second surface facing a direction of the display panel, and the window layer may further include at least one planarization layer stacked on the first surface and/or the second surface.

According to various embodiments, the at least one planarization layer may include a first planarization layer stacked on the first surface of the glass layer and a second planarization layer stacked on the second surface of the glass layer, and the window layer further includes a hard coating layer stacked on the first planarization layer may be further included.

The embodiments of the disclosure disclosed in the specification and drawings are merely provided for specific examples in order to easily explain the technical contents according to the embodiments of the disclosure and help the understanding of the embodiments of the disclosure, and are not intended to limit the scope of the embodiments of the disclosure. Therefore, the scope of various embodiments of the disclosure should be construed to include all changes or modifications derived from the technical ideas of various embodiments of the disclosure in addition to the embodiments disclosed herein.

## Claims

1. a first housing;
a second housing foldably connected to the first housing through a hinge device; and
a flexible display including:
a first portion positioned in the first housing,
a second portion positioned in the second housing, and
a third portion connecting the first portion and the second portion and configured to be bendable, wherein the flexible display includes:
a window layer including a first region corresponding to the first portion, a second region corresponding to the second portion, and a third region corresponding to the third portion and configured to be bendable;
a display panel disposed under the window layer; and
a subsidiary material layer disposed under the display panel,
wherein the window layer includes a glass layer including a plurality of first openings formed at specified intervals in the third region, and
wherein the plurality of first openings are filled with a filler member.

2. The electronic device of claim 1, wherein a bending characteristic of the third region of the window layer is determined based on a refractive index of the filling member.

3. The electronic device of claim 2, wherein the refractive index of the filling member is substantially equal to a refractive index of the glass layer.

4. The electronic device of claim 1, wherein:
the glass layer has a first surface facing an outside of the electronic device and a second surface facing a direction of the display panel, and
the window layer further includes at least one planarization layer stacked on the first surface or the second surface.

5. The electronic device of claim 4, wherein the at least one planarization layer is formed of a material identical with the filling member.

6. The electronic device of claim 4, wherein the at least one planarization layer is formed of a material different from the filling member.

7. The electronic device of claim 4, wherein:
the at least one planarization layer includes:
a first planarization layer stacked on the first surface of the glass layer, and
a second planarization layer stacked on the second surface of the glass layer, and
the window layer further includes a hard coating layer stacked on the first planarization layer.

8. The electronic device of claim 7, wherein the hard coating layer is formed to have a thickness in a range of 0.01 mm to 0.05 mm.

9. The electronic device of claim 7, wherein the hard coating layer is formed to have a hardness value in a range of 60 Shore D to 90 Shore D.

10. The electronic device of claim 4, wherein the at least one planarization layer is formed to have a thickness in a range of 0.01 mm to 0.1 mm.

11. The electronic device of claim 7, wherein the at least one planarization layer is formed to have a hardness value in a range of 20 Shore D to 50 Shore D.

12. The electronic device of claim 1, wherein the glass layer is formed to have a thickness in a range of 0.1 mm to 0.5 mm.

13. The electronic device of claim 1, wherein a bending characteristic of the third region of the window layer is determined through a shape or an arrangement structure of the plurality of first openings.

14. The electronic device of claim 1, wherein the plurality of first openings are arranged to have a length in a parallel direction along a bending axis of the third region.

15. The electronic device of claim 1, wherein the plurality of first openings are arranged to have different arrangement densities by region in the third region.
